# EUROPEAN PATENT APPLICATION

(11) **EP 4 841 558 A1**
(43) Date of publication of application: **18.11.2026**
(21) Application number: 26154308.6
(22) Date of filing: 27.01.2026
(51) Int. Cl.: G06T 7/00, G06T 7/11, G06T 7/136

(54) **SYSTEM AND METHOD FOR EVALUATING AND QUANTIFYING POROSITY OF COMPONENTS**

(30) Priority: 13.05.2025 US 202519206172
(71) Applicant: The Boeing Company, Arlington, VA 22202 (US)
(72) Inventor: GAYLE, David Michael, Arlington, 22202 (US); MILLER, Gina M., Arlington, 22202 (US); PRAJAPATI, Seeran, Arlington, 22202 (US); NAVA, Michael Joaquin, Arlington, 22202 (US); KIRBY, Monica Sonya Joshi, Arlington, 22202 (US); VERRAN, Zachary Tyler, Arlington, 22202 (US)
(74) Representative: St Clair Jones, Gregory Arthur Langley

(57) **Abstract**

A system and a method include an imaging device configured to acquire an image of a sample coupon, and output image data including the image of the sample coupon. A control unit is configured to receive the image data including the image of the sample coupon, generate a first histogram of the sample coupon from the image of the sample coupon, and determine a porosity region of interest within the first histogram. The porosity region of interest within the first histogram is outside of two standard deviations from a first peak within the first histogram.

## Description

### FIELD OF THE DISCLOSURE

Examples of the present disclosure generally relate to systems and methods for evaluating and quantifying porosity of components, such as those formed of composite materials.

### BACKGROUND OF THE DISCLOSURE

Various structures, such as those formed of composite materials, include pores. Image analysis has been used to quantify porosity of structures. It has been found, however, that such processes are inconsistent, and can often generate inaccurate results.

### SUMMARY OF THE DISCLOSURE

A need exists for an improved system and method for quantifying porosity of structures, such as composite structures. Further, a need exists for an efficient, effective, and accurate system and method for evaluating and quantifying porosity of components, such as structures formed of composite materials.

With those needs in mind, certain examples of the present disclosure provide a system including an imaging device configured to acquire an image of a sample coupon, and output image data including the image of the sample coupon. A control unit is configured to receive the image data including the image of the sample coupon, generate a first histogram of the sample coupon from the image of the sample coupon, and determine a porosity region of interest within the first histogram. The porosity region of interest within the first histogram is outside of two standard deviations from a first peak within the first histogram. In at least one example, the control unit is further configured to ignore data within the two standard deviations from the peak within the first histogram. In at least one example, a microscope includes the imaging device, and the image is a photomicrograph.

In at least one example, the control unit is further configured to determine the first peak in relation to an associated first peak within a second histogram generated from a second image of a calibration coupon. The control unit can be further configured to determine that the second histogram of the calibration coupon has a uniform Gaussian distribution. The calibration coupon can be used to calibrate one or more of a microscope, a light source, or the imaging device.

In at least one example, the first peak is a resin peak. As another example, the first peak can be a fiber peak.

In at least one example, the control unit is further configured to determine a number of pores within the porosity region of interest. As a further example, the control unit is configured to determine a porosity percentage of the sample coupon. As a further example, the control unit is configured to determine the porosity percentage of the sample coupon by dividing the number of pores within the porosity region of interest by a total area of image of the sample coupon.

In at least one example, the system further includes a user interface having a display. The control unit is in communication with the user interface. The control unit is further configured to show the image on the display. In at least one example, the control unit is further configured to show indicators on the image. The indicators show locations of pores within the first image.

In at least one example, the sample coupon is extracted from a component. Further, the component and the sample coupon can be formed of a composite material.

Certain examples of the present disclosure provide a method including: receiving, by the control unit, the image data including the first photomicrograph of the sample coupon; generating, by the control unit, a first histogram of the sample coupon from the first photomicrograph of the sample coupon; determining, by the control unit, a porosity region of interest within the first histogram, wherein the porosity region of interest within the first histogram is outside of two standard deviations from a first peak within the first histogram; and ignoring, by the control unit, data within the two standard deviations from the peak within the first histogram.

### BRIEF DESCRIPTION OF THE DRAWINGS

Figure 1 illustrates a block diagram of a system, according to an example of the present disclosure.
Figure 2 illustrates a top view of a sample coupon on an optical mount, according to an example of the present disclosure.
Figure 3 illustrates a perspective view of a microscope, according to an example of the present disclosure.
Figure 4 illustrates an image of the sample coupon, according to an example of the present disclosure.
Figure 5 illustrates a histogram of the image of the sample coupon, according to an example of the present disclosure.
Figure 6 illustrates the image of the sample coupon having pores shown by indicators, according to an example of the present disclosure.
Figure 7 illustrates a flow chart of a method for initially calibrating a microscope, according to an example of the present disclosure.
Figure 8 illustrates a flow chart of a method for qualitatively checking a light source and magnification of a microscope, according to an example of the present disclosure.
Figure 9 illustrates a flow chart of a method for acquiring an image, according to an example of the present disclosure.
Figure 10 illustrates a flow chart of analyzing an image, according to an example of the present disclosure.
Figure 11 illustrates a schematic block diagram of a control unit, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide a universal approach for analyzing images, such as photomicrographs acquired by an imaging device of a microscope, which can be implemented regardless of the microscope or variable set-ups used. In at least one example, the standardized procedure is based on a reference porosity photomicrograph standard, histograms, light source, shutter speed, and threshold calculation, thereby enabling a consistent measurement of percent porosity.

Certain examples of the present disclosure provide a method for quantifying porosity in composite components using statistical histogram and fingerprint analysis of photomicrograph images. In at least one example, the method is based on an evaluation of a trimodal population (porosity, resin, and fiber) for optimizing polishing, image acquisition, and image evaluation. Once a main peak (such as a resin peak or fiber peak) is identified, peak/2 is used to threshold, which provides proper separation of the resin and pore peaks to avoid counting the resin population with the pore population.

Examples of the present disclosure provide a quantitative method to conduct non-destructive inspection (NDI) of composite parts using statistical analysis. The method standardizes sample preparation, image acquisition, and image evaluation. In doing so, the systems and methods described herein establish a standardized process for collecting and analyzing porosity optical data. By analyzing a histogram in relation to peak/2, the systems and methods remove subjective visual thresholding that is currently used in composite porosity evaluation and quantification. In at least one example, peak/2 refers to ignoring data within two standard deviations of the peak. Thus, any data within 2 standard deviations of the peak, such as the resin peak, is not used to determine a number of pores. Conversely, data that is greater than 2 standard deviations of the peak is used to determine a number of pores of a component.

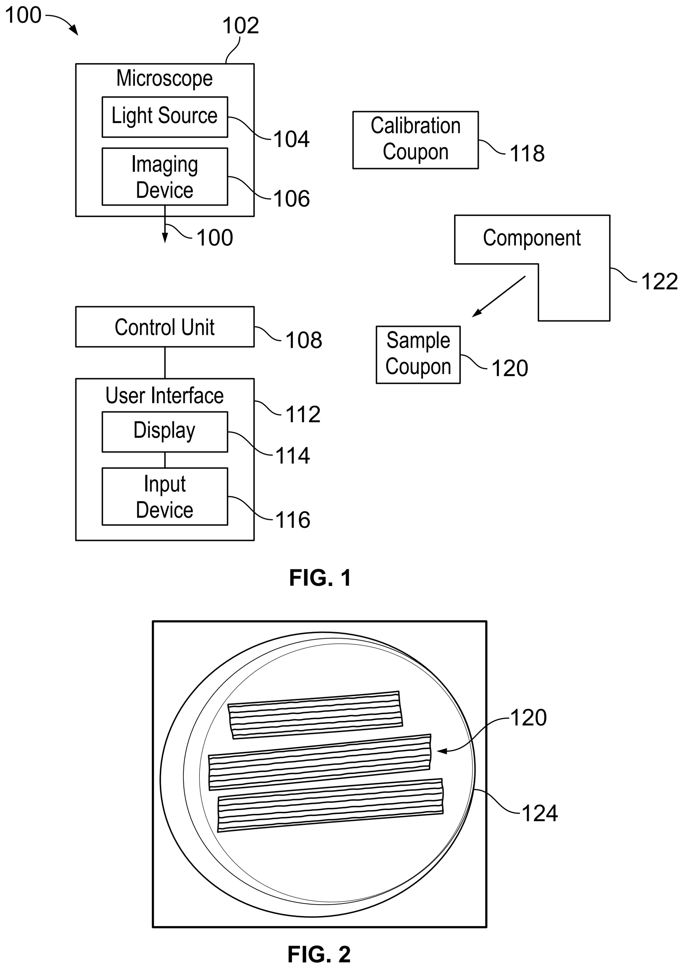

Figure 1 illustrates a block diagram of a system 100, according to an example of the present disclosure. The system 100 includes a microscope 102, which includes a light source 104, and an imaging device 106. The light source 104 can be one or more light emitting diodes (LEDs), one or more incandescent lamps, one or more fluorescent lamps, and/or the like. The imaging device 106 can be a digital camera. Optionally, the light source 104 and/or the imaging device 106 can be separate and distinct from the microscope 102.

A control unit 108 is in communication with the microscope 102, such as through one or more wired or wireless connections. For example, the control unit 108 is in communication with imaging device 106, and is configured to receive image data 110 (including one or more acquired images) from the imaging device 106.

The control unit 108 is also in communication with a user interface 112, such as through one or more wired or wireless connections. The user interface 112 includes a display 114 and an input device 116. The display 114 can be a monitor, screen, television, touchscreen, and/or the like. The input device 116 can include a keyboard, mouse, stylus, touchscreen interface (that is, the input device 116 can be integral with the display 114), and/or the like. The control unit 108 and the user interface 112 can be, or part of, a computer workstation. As another example, the control unit 108 and the user interface 112 housed within a handheld device, such as a smart phone, tablet, or the like.

In order to calibrate the microscope 102, a calibration coupon 118 is viewed and magnified by the microscope 102 and one or more images of the calibration coupon 118 are acquired by the imaging device 106. As such, the imaging device 106 acquires one or more photomicrograph images of the calibration coupon 118. A photomicrograph image is an image of an object as magnified by the microscope 102.

The calibration coupon 118 is a control sample used to verify that the lighting emitted by the light source 104 is uniform, and generally calibrate the microscope 102. In at least one example, the calibration coupon 118 is a basic object having a standard color. For example, the calibration coupon 118 can be a gray paint chip. The calibration coupon 118 can have few or no pores.

After the microscope 102 is calibrated through one or more images of the calibration coupon 118, the microscope 102 is used to magnify and image a sample coupon 120 extracted from a component 122. In at least one example, the sample coupon 120 and the component 122 are formed of a composite material, such as a composite reinforced plastic. The imaging device 106 acquires one or more images (such as one or more photomicrographs) of the sample coupon 120, and outputs the image data 110, which includes the one or more images of the sample coupon 120. The control unit 108 receives the image data 110, and analyzes the image(s) of the sample coupon 120 to determine a porosity of the sample coupon 120, as described herein.

Figure 2 illustrates a top view of the sample coupon 120 on an optical mount 124, according to an example of the present disclosure. Referring to Figures 1 and 2, after the sample coupon 120 is formed, such as by extraction from the component 122, the sample coupon 120 is secured on the optical mount 124. Optionally, the sample coupon 120 is not mounted on an optical mount.

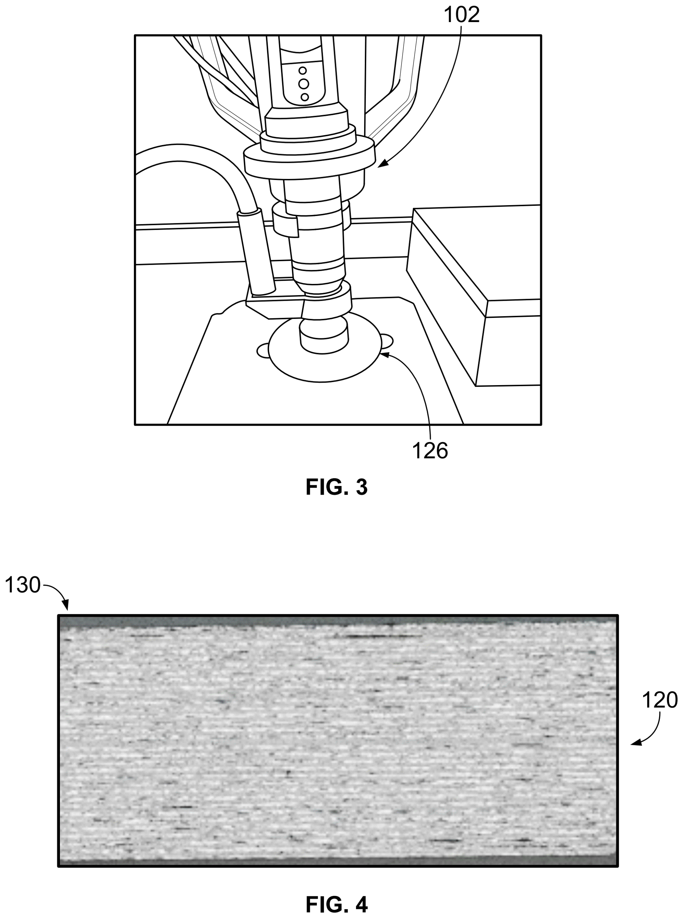

Figure 3 illustrates a perspective view of the microscope 102, according to an example of the present disclosure. Referring to Figures 1-3, the sample coupon 120 disposed on the optical mount 124 is placed within an imaging area 126 of the microscope 102. The microscope 102 is then used to magnify the sample coupon 120 at a desired magnification, and the imaging device 106 acquires one or more images (such as photomicrographs) of the sample coupon 120, as magnified by the microscope 102. In at least one example, the control unit 108 can operate the microscope 102 and/or the imaging device 106. Optionally, the control unit 108 is not used to control operation of the microscope 102 and/or the imaging device 106.

Figure 4 illustrates an image 130 of the sample coupon 120, according to an example of the present disclosure. Referring to Figures 1-4, the sample coupon 120 includes resin, fibers, and pores, which are shown in the image 130. In at least one example, the control unit 108 shows the image 130 on the display 114 of the user interface 112.

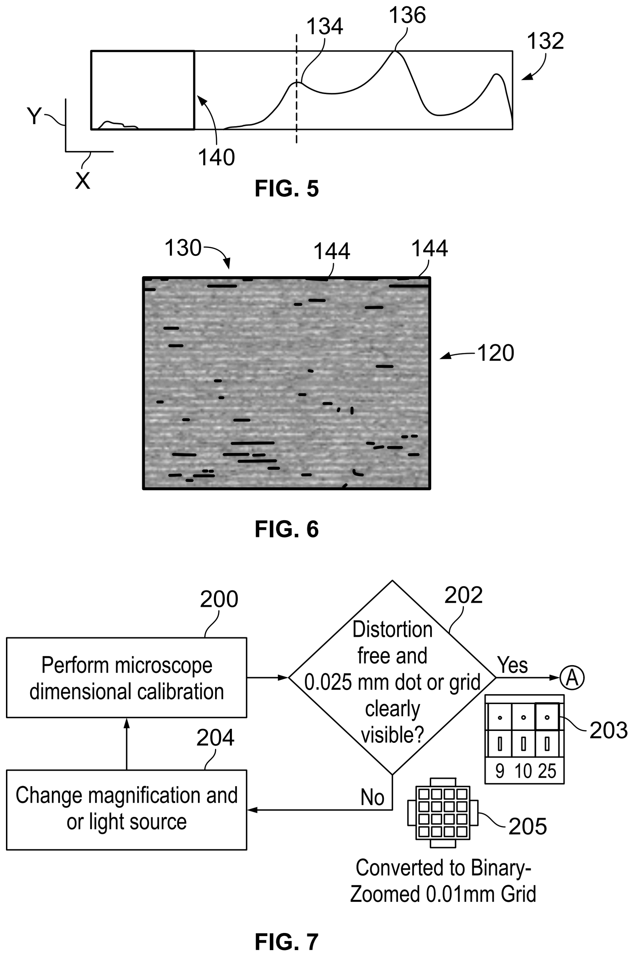

Figure 5 illustrates a histogram 132 of the image 130 (shown in Figure 4) of the sample coupon 120 (shown in Figures 1, 2, and 4), according to an example of the present disclosure. In at least one example, the control unit 108 shows the histogram 132 on the display 114 of the user interface 112. After receiving the image 130 from the imaging device 106, the control unit 108 generates the histogram 132. The histogram 132 includes peaks 134 and 136, and a porosity area of interest 140. The control unit 108 automatically determines the porosity of interest 140. For example, the control unit 108 finds the peak 134, such as a resin peak, and then determines two standard deviations from the peak 134. The control unit 108 then ignores any data within two standard deviations of the peak 134. The porosity region of interest 140 is outside of two standard deviations of the peak 134, which can be referred to as peak/2.

The porosity region of interest 140 includes the number of pores of the sample coupon 120. In particular, the histogram 132 includes an X axis, which is pixel value, and a Y axis, which is count or number. As such, the control unit 108 counts (that is, automatically, without human intervention) the number, as provided by the Y axis, within the porosity region of interest 140 to determine the number of pores within the sample coupon 120. In at least one further example, the control unit 108 then divides the number of pores of the sample coupon 120, as determined from the porosity region of interest 140, by a total area of the image 130 to determine (for example, automatically, without human intervention) a percent porosity of the sample coupon 120.

Referring to Figures 1-5, the system 100 includes the imaging device 106, which is configured to acquire the image 130 of the sample coupon 120. The imaging device 106 outputs the image data 110, which includes the image 130 of the sample coupon 120. The control unit 108 receives the image data 110 including the image 130 of the sample coupon 120. The control unit 108 then generates the histogram 132 of the sample coupon 120 from the image 130 of the sample coupon 120. The control unit 108 then determines the porosity region of interest 140 within histogram 132, such as by determining an area that is two standard deviations or more from the peak 134 within the histogram 132. In at least one example, the control unit 108 is further configured to ignore data within the two standard deviations from the peak within the first histogram, as such data is not related to porosity.

In at least one example, the control unit 108 determines the peak 134 based on an associated peak within a histogram of the calibration coupon 118. For example, the control unit 108 uses the histogram of the calibration coupon 118 to find a peak, and then determines the peak 134 due to similarity in shape with the peak of the calibration coupon 118.

In at least one example, the peak 134 peak is a resin peak. In at least one other example, the peak 134 can be a fiber peak.

The control unit 108 determines a number of pores within the porosity region of interest 140, thereby determining the total number of pores within the sample coupon 120. In at least one example, the control unit 108 also determines a porosity percentage of the sample coupon 120. For example, the control unit 108 determines the porosity percentage of the sample coupon by dividing the number of pores within the porosity region of interest 140 by a total area of the image 130 of the sample coupon 120.

Figure 6 illustrates the image 130 of the sample coupon 120 having the pores shown by indicators 144, according to an example of the present disclosure. Referring to Figures 1 and 6, in at least one example, the control unit 108 shows the image 130 having the indicators 144 on the display 114 of the user interface 112. The indicators 144 can be highlighted areas, different colors (such as red), and/or the like to show locations of the pores within the image 130.

Figure 7 illustrates a flow chart of a method for initially calibrating a microscope, according to an example of the present disclosure. Referring to Figures 1 and 7, at 200, the calibration coupon 118 is imaged and magnified by the microscope 102 to perform a microscope dimensional calibration. At 202, it is determined (either via viewing by an individual from an image shown on the display 114, or automatically by the control unit 108) whether the image is distortion free (and, optionally, a 0.025 millimeter (mm) dot 203 and/or grid 205 is visible within the image). Optionally, the dot can be greater or less than 0.025 mm. Further, the method may not include a visible dot and/or grid. If not, the method proceeds from 202 to 204, at which magnification of the microscope 102 and/or illumination from the light source 104 is changed. The method then returns to 200. If, however, the image is distortion free and the dot 203 or the grid 205 is visible, the method proceeds to a qualitative check of the light source 104 and magnification of the microscope 102.

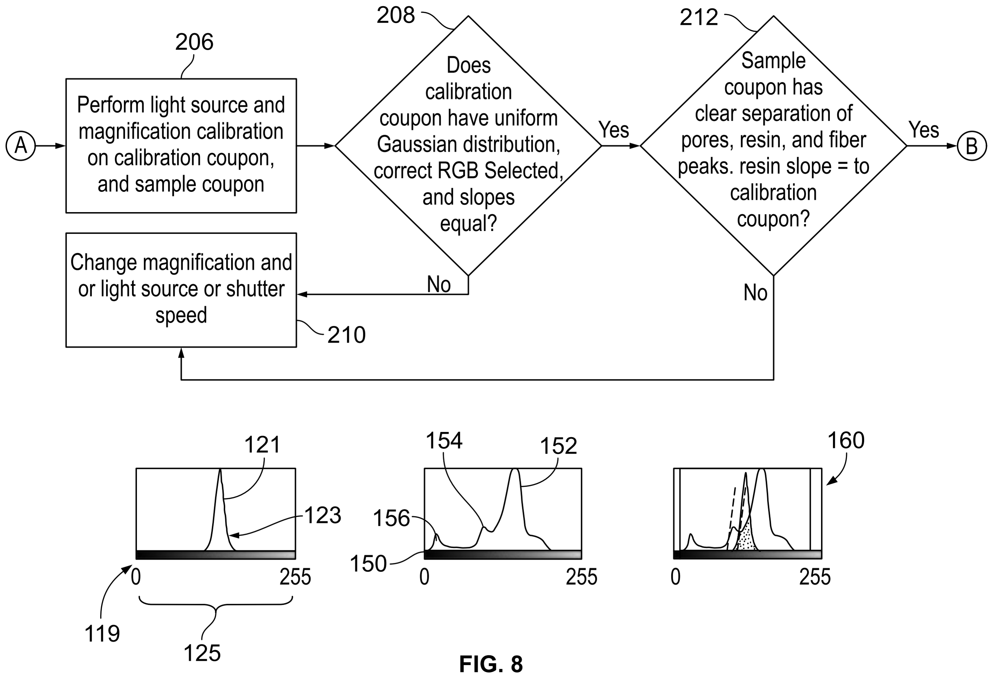

Figure 8 illustrates a flow chart of a method for qualitatively checking a light source and magnification of a microscope, according to an example of the present disclosure. Referring to Figures 1 and 8, after the microscope 102 is initially calibrated, the method proceeds to 206, at which light source and magnification calibration are performed on the calibration coupon 118 and the sample coupon 120. At 208, the control unit 108 determines if the calibration coupon 118 has a uniform Gaussian distribution, correct red-green-blue (RGB) selection, and equal slopes. For example, the control unit 108 determines the uniform Gaussian distribution by determining if a histogram 119 of the calibration coupon 118 has a symmetrical peak 121 positioned in a center 123 of the histogram 119, and does not extend along an entire length 125 of the histogram 119. If the calibration coupon 208 does not have a uniform Gaussian distribution, correct RGB selection, and equal slopes, the method proceeds from 208 to 210, at which the magnification, illumination from the light source 104, and/or shutter speed of the imaging device 106 are changed. The method then returns to 206.

If, however, the calibration coupon 118 has a uniform Gaussian distribution, correct RGB selection, and equal slopes at 208, the method proceeds to 212, at which the control unit 108 determines if the sample coupon 120 has clear separation of pores, resin, and fiber peaks in relation to the histogram 119 of the calibration coupon 118. For example, the control unit 108 determines the pores, resin, and fiber peaks within a histogram 150 of the sample coupon 120 through image analysis, thresholding, predetermined areas stored in a memory for such peaks, and/or the like. In particular, within the histogram 150 of the sample coupon 120, the control unit 108 locates a fiber peak 152, a resin peak 154, and a pore peak 156.

In at least one example, the control unit 108 overlays the histogram 119 onto the histogram 150 to provide a combined histogram 160, which shows a difference therebetween, and allows the control unit 108 to determine the resin peak 154 within the histogram 150 of the sample coupon 120 through detection of substantially parallel (such as within +/- 5%) peak values. That is, parallel slopes between the symmetrical peak 121 of the calibration coupon 118 and the peak 154 allow the control unit 108 to identify the peak 154 as the resin peak 154.

If the control unit 108 determines there is not clear separation between pores, resin, and fiber peaks within the histogram 150 of the sample coupon 120 at 212, the method returns to 210. If, however, the control unit 108 determines clear separation at 212, the method proceeds to evaluation of the histogram 150 to determine porosity.

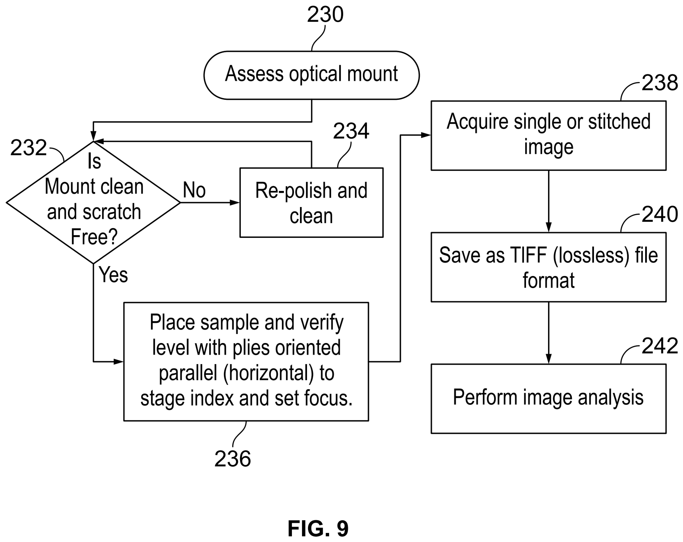

Figure 9 illustrates a flow chart of a method for acquiring an image, according to an example of the present disclosure. Referring to Figures 1-3 and 9, before acquiring images of the sample coupon 120 and the calibration coupon 118, the microscope 102 and the imaging device 106 are initially assessed at 230. For example, prior to image acquisition, at 232 it is determined if the optical mount 124 is clean and scratch free. If not, the method proceeds to 234, at which the optical mount 124 is repolished and cleaned. The method then returns to 232.

If the optical mount is clean and scratch free at 232, the method proceeds to 236, at which the sample coupon 120 is placed on the optical mount 124, and a level of the sample coupon 120 on the optical mount 124 is verified with plies oriented parallel (horizontal) to stage index and set focus of the microscope 102. Next, at 238, a single or stitched image is acquired of the sample coupon 120. At 240, the image is saved, such as a tagged image file format (TIFF) file. Optionally, the image can be saved as a lossy file type. The control unit 108 then performs image analysis of the image at 242.

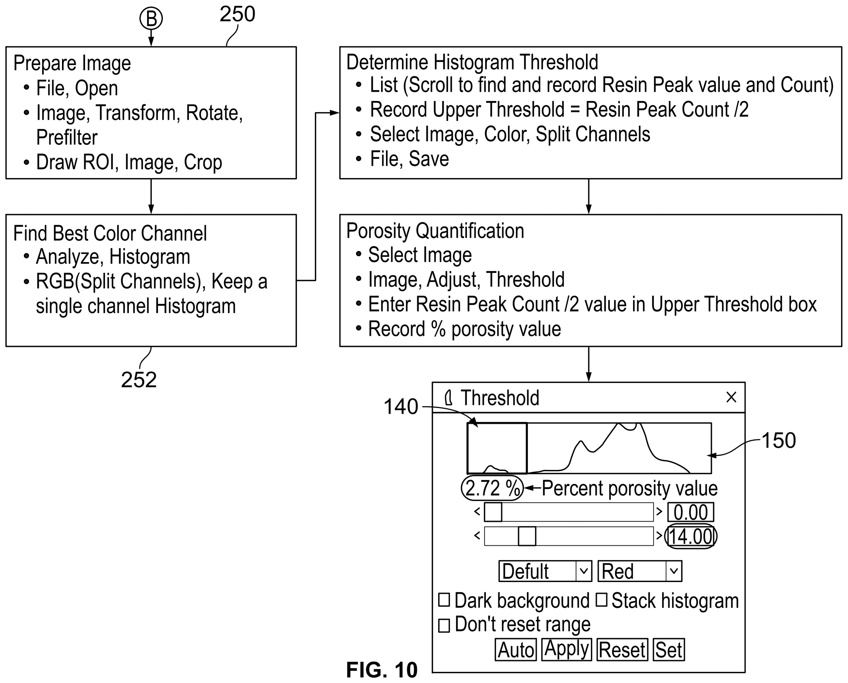

Figure 10 illustrates a flow chart of analyzing an image, according to an example of the present disclosure. Referring to Figures 1 and 10, after an image (such as a photomicrograph) of the sample coupon 120 is acquired by the imaging device 106, at 250, the control unit 108 prepares the image, such as by opening the image (as included within the image data 110), transforming the image into the histogram 150, drawing a region of interest, and/or the like. At 252, the control unit 108 then finds a best color channel for the image, such as by analyzing the histogram 150, and focusing on a particular color channel were pores are typically found, such as in the green channel.

Next, at 254, the control unit 108 determines a threshold for the histogram 150, such as by listing or scrolling to find and record a resin peak value and count, recording an upper threshold for the resin peak, and determining resin peak/2 (such as two standard deviations from the resin peak). At 256, after determining the resin peak/2, the control unit 108 can then quantify porosity, such as by focusing on the porosity region of interest 140 (which is in an area greater than two standard deviations from the resin peak). The number of pores within the porosity region of interest 140 provides an accurate indication of the number of pores within the sample coupon 120. The control unit 108 can then divide the number of pores, as determined from the porosity region of interest 140, by the total area of the image of the sample coupon 120 to determine a porosity percentage of the sample coupon 120.

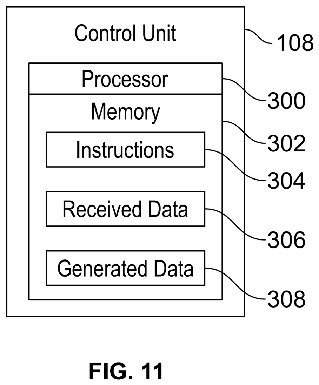

Figure 11 illustrates a schematic block diagram of the control unit 108, according to an example of the present disclosure. In at least one example, the control unit 108 includes at least one processor 300 in communication with a memory 302. The memory 302 stores instructions 304, received data 306, and generated data 308. The control unit 108 shown in Figure 11 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 108 may be or include one or more processors that are configured to control operation, as described herein.

The control unit 108 is configured to execute a set of instructions that are stored in one or more data storage units or elements (such as one or more memories), in order to process data. For example, the control unit 108 may include or be coupled to one or more memories. The data storage units may also store data or other information as desired or needed. The data storage units may be in the form of an information source or a physical memory element within a processing machine.

The set of instructions may include various commands that instruct the control unit 108 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 108. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 108 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Further, the disclosure comprises examples according to the following clauses:
Clause 1. A system comprising:
   an imaging device configured to acquire an image of a sample coupon, and output image data including the image of the sample coupon; and
   a control unit configured to:
      receive the image data including the image of the sample coupon,
      generate a first histogram of the sample coupon from the image of the sample coupon, and
      determine a porosity region of interest within the first histogram, wherein the porosity region of interest within the first histogram is outside of two standard deviations from a first peak within the first histogram.
Clause 2. The system of Clause 1, wherein the control unit is further configured to ignore data within the two standard deviations from the peak within the first histogram.
Clause 3. The system of Clauses 1 or 2, further comprising a microscope, wherein the microscope comprises the imaging device, and wherein the image is a photomicrograph.
Clause 4. The system of any of Clauses 1-3, wherein the control unit is further configured to determine the first peak in relation to an associated first peak within a second histogram generated from a second image of a calibration coupon.
Clause 5. The system of Clause 4, wherein the control unit is further configured to determine that the second histogram of the calibration coupon has a uniform Gaussian distribution.
Clause 6. The system of any of Clauses 4-6, wherein the calibration coupon is used to calibrate one or more of a microscope, a light source, or the imaging device.
Clause 7. The system of any of Clauses 1-6, wherein the first peak is a resin peak.
Clause 8. The system of any of Clauses 1-7, wherein the control unit is further configured to determine a number of pores within the porosity region of interest.
Clause 9. The system of any of Clauses 1-8, wherein the control unit is further configured to determine a porosity percentage of the sample coupon.
Clause 10. The system of Clause 9, wherein the control unit is configured to determine the porosity percentage of the sample coupon by dividing the number of pores within the porosity region of interest by a total area of image of the sample coupon.
Clause 11. The system of any of Clauses 1-10, further comprising a user interface having a display, wherein the control unit is in communication with the user interface, and wherein the control unit is further configured to show the image on the display.
Clause 12. The system of Clause 11, wherein the control unit is further configured to show indicators on the image, wherein the indicators show locations of pores within the first image.
Clause 13. The system of any of Clauses 1-12, wherein the sample coupon is extracted from a component, and wherein the component and the sample coupon are formed of a composite material.
Clause 14. A method for a system comprising:
   a microscope including an imaging device, wherein the imaging device configured to acquire a first photomicrograph of a sample coupon, and output image data including the first photomicrograph of the sample coupon; and
   a control unit configured to:
      receive the image data including the first photomicrograph of the sample coupon,
      generate a first histogram of the sample coupon from the first photomicrograph of the sample coupon, and
      determine a porosity region of interest within the first histogram, wherein the porosity region of interest within the first histogram is outside of two standard deviations from a first peak within the first histogram,
   the method comprising:
      receiving, by the control unit, the image data including the first photomicrograph of the sample coupon;
      generating, by the control unit, a first histogram of the sample coupon from the first photomicrograph of the sample coupon;
      determining, by the control unit, a porosity region of interest within the first histogram, wherein the porosity region of interest within the first histogram is outside of two standard deviations from a first peak within the first histogram; and
      ignoring, by the control unit, data within the two standard deviations from the peak within the first histogram.
Clause 15. The method of Clause 14, further comprising determining, by the control unit, the first peak in relation to an associated first peak within a second histogram generated from a second photomicrograph of a calibration coupon.
Clause 16. The method of Clause 15, further comprising calibrating one or more of a microscope, a light source, or the imaging device with the calibration coupon.
Clause 17. The method of any of Clauses 14-16, further comprising:
   determining, by the control unit, a number of pores within the porosity region of interest; and
   determining, by the control unit, a porosity percentage of the sample coupon, wherein said determining the porosity percentage comprises dividing the number of pores within the porosity region of interest by a total area of image of the sample coupon.
Clause 18. The method of any of Clauses 14-17, further comprising:
   showing, by the control unit, the image on a display of a user interface; and
   showing, by the control unit, indicators on the image, wherein the indicators show locations of pores within the first image.
Clause 19. The method of any of Clauses 14-18, further comprising extracting the sample coupon from a component, wherein the component and the sample coupon are formed of a composite material.
Clause 20. A system comprising:
   a microscope including an imaging device configured to acquire a first photomicrograph of a sample coupon, and output image data including the first photomicrograph of the sample coupon;
   a user interface including a display; and
   a control unit in communication with the microscope and the user interface, wherein the control unit is configured to:
      receive the image data including the first photomicrograph of the sample coupon,
      show the first photomicrograph on the display,
      generate a first histogram of the sample coupon from the first photomicrograph of the sample coupon,
      determine that a second histogram generated from a second photomicrograph of a calibration coupon has a uniform Gaussian distribution,
      determine a first peak within the first histogram in relation to an associated first peak within the second histogram,
      determine a porosity region of interest within the first histogram, wherein the porosity region of interest within the first histogram is outside of two standard deviations from the first peak within the first histogram,
      ignore data within the two standard deviations from the peak within the first histogram,
      determine a number of pores within the porosity region of interest,
      determine a porosity percentage of the sample coupon by dividing the number of pores within the porosity region of interest by a total area of image of the sample coupon, and
      show indicators on the first photomicrograph, wherein the indicators show locations of pores within the first photomicrograph.

As described herein, examples of the present disclosure provide improved systems and methods for quantifying porosity of structures, such as composite structures. Further, examples of the present disclosure provide efficient, effective, and accurate systems and methods for evaluating and quantifying porosity of components, such as structures formed of composite materials.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system (100) comprising:
an imaging device (106) configured to acquire an image (130) of a sample coupon (120), and output image data (110) including the image (130) of the sample coupon (120); and
a control unit (108) configured to:
receive the image data (110) including the image (130) of the sample coupon (120),
generate a first histogram (132) of the sample coupon (120) from the image (130) of the sample coupon (120), and
determine a porosity region of interest (140) within the first histogram (132), wherein the porosity region of interest (140) within the first histogram (132) is outside of two standard deviations from a first peak within the first histogram (132).

2. The system (100) of claim 1, wherein the control unit (108) is further configured to ignore data within the two standard deviations from the peak within the first histogram (132).

3. The system (100) of claim 1 or claim 2, further comprising a microscope (102), wherein the microscope (102) comprises the imaging device (106), and wherein the image (130) is a photomicrograph.

4. The system (100) of any of claims 1 to 3, wherein the control unit (108) is further configured to determine the first peak in relation to an associated first peak within a second histogram (132) generated from a second image (130) of a calibration coupon (118).

5. The system (100) of claim 4, wherein the control unit (108) is further configured to determine that the second histogram (132) of the calibration coupon (118) has a uniform Gaussian distribution.

6. The system (100) of claim 4 or claim 5, wherein the calibration coupon (118) is used to calibrate one or more of a microscope (102), a light source (104), or the imaging device (106).

7. The system (100) of any of claims 1 to 6, wherein the first peak is a resin peak.

8. The system (100) of any of claims 1 to 7, wherein the control unit (108) is further configured to:
determine a number of pores within the porosity region of interest (140); and/or
determine a porosity percentage of the sample coupon (120).

9. The system (100) of claim 8, wherein the control unit (108) is configured to determine a or the porosity percentage of the sample coupon (120) by dividing the number of pores within the porosity region of interest (140) by a total area of image (130) of the sample coupon (120).

10. The system (100) of any of claims 1 to 9, further comprising a user interface (112) having a display (114), wherein the control unit (108) is in communication with the user interface (112), and wherein the control unit (108) is further configured to show the image (130) on the display (114), optionally, wherein the control unit (108) is further configured to show indicators (144) on the image (130), wherein the indicators (144) show locations of pores within the first image (130).

11. The system (100) of any of claims 1 to 10, wherein the sample coupon (120) is extracted from a component (122), and wherein the component (122) and the sample coupon (120) are formed of a composite material.

12. A method for a system (100) comprising:
a microscope (102) including an imaging device (106), wherein the imaging device (106) configured to acquire a first photomicrograph of a sample coupon (120), and output image data (110) including the first photomicrograph of the sample coupon (120); and
a control unit (108) configured to:
receive the image data (110) including the first photomicrograph of the sample coupon (120);
generate a first histogram (132) of the sample coupon (120) from the first photomicrograph of the sample coupon (120), and
determine a porosity region of interest (140) within the first histogram (132), wherein the porosity region of interest (140) within the first histogram (132) is outside of two standard deviations from a first peak within the first histogram (132),
the method comprising:
receiving, by the control unit (108), the image data (110) including the first photomicrograph of the sample coupon (120),
generating, by the control unit (108), a first histogram (132) of the sample coupon (120) from the first photomicrograph of the sample coupon (120);
determining, by the control unit (108), a porosity region of interest (140) within the first histogram (132), wherein the porosity region of interest (140) within the first histogram (132) is outside of two standard deviations from a first peak within the first histogram (132); and
ignoring, by the control unit (108), data within the two standard deviations from the peak within the first histogram (132).

13. The method of claim 12, further comprising determining, by the control unit (108), the first peak in relation to an associated first peak within a second histogram (132) generated from a second photomicrograph of a calibration coupon (118), optionally, the method further comprising calibrating one or more of a microscope (102), a light source (104), or the imaging device (106) with the calibration coupon (118).

14. The method of claim 12 or claim 13, further comprising:
determining, by the control unit (108), a number of pores within the porosity region of interest (140); and
determining, by the control unit (108), a porosity percentage of the sample coupon (120), wherein said determining the porosity percentage comprises dividing the number of pores within the porosity region of interest (140) by a total area of image (130) of the sample coupon (120),
and/or, the method further comprising:
showing, by the control unit (108), the image (130) on a display (114) of a user interface (112); and
showing, by the control unit (108), indicators (144) on the image (130), wherein the indicators (144) show locations of pores within the first image (130,
and/or, the method further comprising extracting the sample coupon (120) from a component (122), wherein the component (122) and the sample coupon (120) are formed of a composite material.

15. A system (100) comprising:
a microscope (102) including an imaging device (106) configured to acquire a first photomicrograph of a sample coupon (120), and output image data (110) including the first photomicrograph of the sample coupon (120);
a user interface (112) including a display (114); and
a control unit (108) in communication with the microscope (102) and the user interface (112), wherein the control unit (108) is configured to:
receive the image data (110) including the first photomicrograph of the sample coupon (120),
show the first photomicrograph on the display (114),
generate a first histogram (132) of the sample coupon (120) from the first photomicrograph of the sample coupon (120),
determine that a second histogram (132) generated from a second photomicrograph of a calibration coupon (118) has a uniform Gaussian distribution,
determine a first peak within the first histogram (132) in relation to an associated first peak within the second histogram (132),
determine a porosity region of interest (140) within the first histogram (132), wherein the porosity region of interest (140) within the first histogram (132) is outside of two standard deviations from the first peak within the first histogram (132),
ignore data within the two standard deviations from the peak within the first histogram (132),
determine a number of pores within the porosity region of interest (140),
determine a porosity percentage of the sample coupon (120) by dividing the number of pores within the porosity region of interest (140) by a total area of image (130) of the sample coupon (120), and
show indicators (144) on the first photomicrograph, wherein the indicators (144) show locations of pores within the first photomicrograph.
